# EUROPÄISCHE PATENTSCHRIFT

(11) **EP 3 034 358 B1**
(45) Veröffentlichungstag und Bekanntmachung des Hinweises auf die Patenterteilung: **07.03.2018**
(21) Anmeldenummer: 15003465.0
(22) Anmeldetag: 05.12.2015
(51) Int. Cl.: B60Q 1/34, G08G 1/16, G01C 21/36

(54) **FAHRERASSISTENZEINRICHTUNG FÜR EIN KRAFTFAHRZEUG UND VERFAHREN ZUM BETREIBEN EINER SOLCHEN**
DRIVER ASSISTANCE DEVICE FOR A MOTOR VEHICLE AND METHOD FOR OPERATING SAME
DISPOSITIF D'ASSISTANCE AU CONDUCTEUR POUR UN VEHICULE AUTOMOBILE ET SON PROCEDE DE CONTROLE

(30) Priorität: 19.12.2014 DE 102014019193
(43) Veröffentlichungstag der Anmeldung: 22.06.2016
(73) Patentinhaber: AUDI AG, 85045 Ingolstadt (DE)
(72) Erfinder: Engelhardt, Doreen, 85049 Ingolstadt (DE)
(74) Vertreter: Thielmann, Frank

(56) Entgegenhaltungen:
- DE-A1- 10 251 357
- DE-A1-102006 020 631
- JP-A- 2008 087 711
- US-A1- 2009 174 540

## Beschreibung

Die Erfindung betrifft ein eine Fahrerassistenzeinrichtung für ein Kraftfahrzeug mit einer Navigationseinheit zum Bestimmen einer Position des Kraftfahrzeugs, einer Anzeigeeinheit zum Anzeigen einer Fahrtrichtungsänderung sowie einer Steuereinheit zum Steuern der Anzeigeeinheit in Abhängigkeit von der Navigationseinheit, gemäß dem Oberbegriff von Patentanspruch 1. Sie betrifft ferner ein Verfahren zum Betreiben einer solchen Fahrerassistenzeinrichtung.

In modernen Kraftfahrzeugen übernehmen Assistenzsysteme mehr und mehr Funktionen, um einen Fahrer eines Kraftfahrzeugs zu entlasten und die Sicherheit im Straßenverkehr zu erhöhen. So weisen mehr und mehr Fahrerassistenzeinrichtungen auch eine Navigationseinheit auf, mittels welcher eine Route berechnet und einem Fahrer angezeigt werden kann. Dabei gibt es unterschiedliche Möglichkeiten den Fahrer weiter zu entlasten und die Sicherheit zu erhöhen.

So offenbart die DE 197 22 186 A1 ein Verfahren zum Erkennen des Zeitpunkts für das Betätigen von Fahrtrichtungssignalleuchten bei Fahrzeugen, bei welchen der Standort und die Bewegung des Fahrzeugs anhand eines Navigationssystems unter Zugrundelegen eines Verkehrswegenetzes bestimmt und der besagte Zeitpunkt durch Analyse des seit dem Setzen der Fahrtrichtungssignalleuchten zurückgelegten Fahrtweges bestimmt wird. Dabei kann zu dem besagten Zeitpunkt die Fahrersignalleuchte selbsttätig durch das Navigationssystem betätigt werden.

Die DE 103 55 807 A1 offenbart eine Anordnung zur Steuerung eines Kraftfahrzeugblinkers eines Kraftfahrzeugs mit einer videobasierten Fahrspurerkennung sowie einer Einheit zur automatischen Aktivierung und/oder Deaktivierung des Blinkers in Abhängigkeit der aktivierten Fahrspurerkennung.

Die DE 10 2008 046 406 A1 beschreibt ein Kraftfahrzeug mit einem Blinker und mit einem Navigationssystem, welches mit dem Blinker gekoppelt ist. Dabei ist das Navigationssystem ausgestaltet, eine Route zu einem Ziel zu ermitteln und eine momentane Position des Kraftfahrzeugs zu überwachen. Weist die Route eine Abbiegung auf, so wird durch das Navigationssystem der Blinker automatisch aktiviert, wenn sich das Kraftfahrzeug der Abbiegung nähert.

Die US 2009/174540 A1 offenbart ein System zum Automatisieren des Signalisierens eines Abbiegens und Spurwechselns eines Automobils. Das System weist Mittel zum Empfangen von Fahrzeugdynamikdaten und von Fahrerkontrolldaten auf, sowie jeweilige wahrscheinlichkeitsbasierte Schätzer zum Abschätzen eines Weges des Automobils sowie einer Entscheidung zum Setzen eines Abbiegesignals.

Die DE 10 2006 020 631 A1 offenbart eine Steuereinrichtung zur Steuerung eines Fahrtrichtungsänderungsanzeigers eines Kraftfahrzeugs in Abhängigkeit von einer vorgegebenen Route des Kraftfahrzeugs und von Lagekoordinaten des Kraftfahrzeugs.

Es ist Aufgabe der vorliegenden Erfindung, eine automatische Aktivierung einer Fahrtrichtungsänderung bereitzustellen, welche besonders wenig Bedienhandlungen einer Bedienperson erfordert, sodass insbesondere der Fahrer entlastet und die Sicherheit erhöht wird.

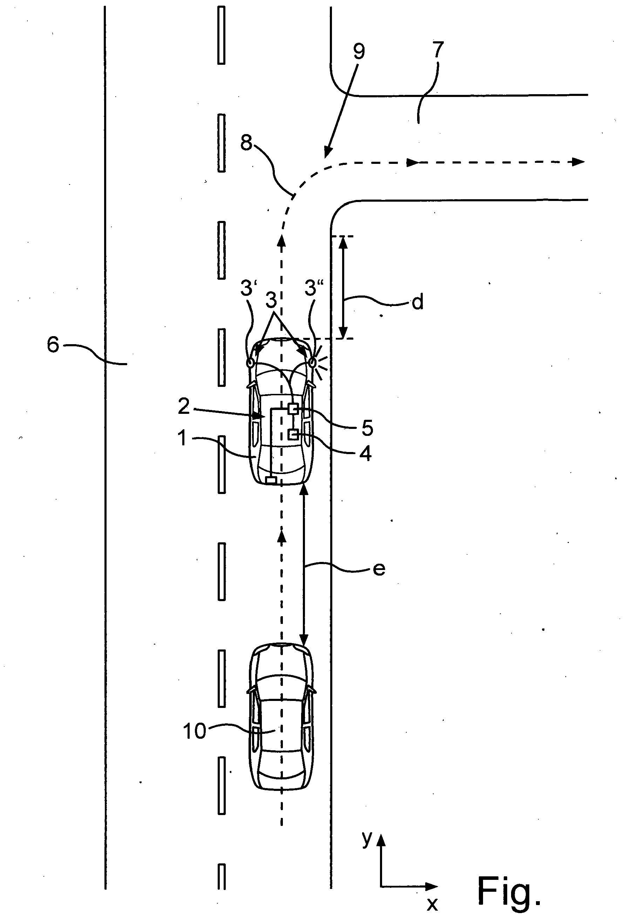

Diese Aufgabe wird durch die Gegenstände der unabhängigen Patentansprüche gelöst. Vorteilhafte Ausführungsformen ergeben sich aus den abhängigen Patentansprüchen, der Beschreibung und der Figur.

Eine erfindungsgemäße Fahrerassistenzeinrichtung für ein Kraftfahrzeug umfasst eine Navigationseinheit zum Bestimmen einer Position des Kraftfahrzeugs, eine Anzeigeeinheit zum Anzeigen einer Fahrtrichtungsänderung des Kraftfahrzeugs sowie eine Steuereinheit zum Steuern der Anzeigeeinheit in Abhängigkeit von der Navigationseinheit. Dabei ist die Steuereinheit ausgelegt, die Anzeigeeinheit automatisch zu aktivieren, wenn das Kraftfahrzeug sich einer Abzweigung, einer Kreuzung oder einer vorgegebenen Position eines Spurwechsels nähert, an welcher gemäß einer in der Navigationseinheit gespeicherten Route eine Fahrtrichtungsänderung des Kraftfahrzeugs zu erwarten ist. Um eine automatische Aktivierung der Anzeigeeinheit mit möglichst wenig Bedienhandlungen und einem geringen Aufwand seitens einer Bedienperson zu realisieren, ist die Navigationseinheit ausgelegt, auf Basis einer Vielzahl von durch die Navigationseinheit bestimmten, also ermittelten Positionen des Kraftfahrzeugs zumindest eine präferierte Route selbsttätig zu speichern. Für das selbsttätige Speichern der präferierten Route auf Basis der bestimmten oder ermittelten Positionen kann zum Beispiel ein Lernalgorithmus zum Einsatz kommen, welcher beispielsweise eine Häufigkeit von angefahrenen Positionen berücksichtigt und dabei insbesondere auch eine Aktualität der ermittelten Positionen berücksichtigt, an welchen das Kraftfahrzeug sich befunden hat. Des Weiteren ist die Steuereinheit hier ausgelegt, die Anzeigeeinheit in einem Unterstützungs-Betriebsmodus automatisch zu aktivieren, wenn das Kraftfahrzeug sich auf der von der Navigationseinheit gespeicherten präferierten Route der Abzweigung, der Kreuzung oder der vorgegebenen Position eines Spurwechsels nähert, an welcher gemäß der gespeicherten präferierten Route eine Fahrtrichtungsänderung des Kraftfahrzeugs zu erwarten ist. Dies kann erfolgen, ohne dass die gespeicherte präferierte Route durch die Navigationseinheit angezeigt wird. Das hat den Vorteil, dass die automatische Aktivierung der Anzeigeeinheit nicht an ein vorheriges Eingeben einer Route in die Navigationseinheit durch eine Bedienperson gekoppelt ist. Somit kann der Fahrer durch die Fahrerassistenzeinrichtung entlastet werden, ohne zuvor erst umständlich die Navigationseinheit zu programmieren. Vielmehr werden so insbesondere häufig abgefahrene Routen, welche typischerweise da der Fahrer diese gut kennt gerade nicht in eine Navigationseinheit eingegeben werden, mit dem Mehrwert der automatischen Aktivierung der Anzeigeeinheit zum Anzeigen einer Fahrtrichtungsänderung, vulgo Blinker, versehen. Erfindungsgemäß ist vorgesehen, dass die Fahrerassistenzeinrichtung eine erste Erfassungseinheit zum Erfassen eines anderen Kraftfahrzeugs aufweist. Durch die erste Erfassungseinheit ist eine Geschwindigkeit des anderen Kraftfahrzeugs und/oder ein Abstand des anderen Kraftfahrzeugs von dem eigenen Kraftfahrzeug erfassbar. Dabei ist die Anzeigeeinheit mittels der Steuereinheit in Abhängigkeit von der Geschwindigkeit und/oder von dem Abstand aktivierbar. Das hat den Vorteil, dass die automatische Aktivierung der Anzeigeeinheit besser an eine gegebenen Situation anpassbar ist und somit zu einer gesteigerten Sicherheit im Straßenverkehr beiträgt, da im Allgemeinen gerade andere Kraftfahrzeuge auf eine Fahrtrichtungsänderung aufmerksam gemacht werden sollen.

Dabei kann vorgesehen sein, dass mittels der ersten Erfassungseinheit ein hinter dem Kraftfahrzeug fahrendes anderes Kraftfahrzeug erfassbar ist und die Anzeigeeinheit mittels der Steuereinheit in Abhängigkeit von dem Abstand des hinter dem Kraftfahrzeug fahrenden anderen Kraftfahrzeugs und/oder von dessen Geschwindigkeit aktivierbar ist. Das hat den Vorteil, dass so in Abhängigkeit von einer gegebenen Situation ein sich hinter dem Kraftfahrzeug befindliches anderes Kraftfahrzeug besonders gut auf eine bevorstehende Fahrtrichtungsänderung des eigenen Kraftfahrzeugs hingewiesen werden kann. Dies trägt zu einer Erhöhung der Verkehrssicherheit bei und verringert die Wahrscheinlichkeit eines Auffahrunfalls.

Die Steuereinheit ist ausgelegt, bei einer höheren Geschwindigkeit und/oder einem geringeren Abstand des anderen Kraftfahrzeugs bereits in größerem Abstand von der Abzweigung, der Kreuzung oder der vorgegebenen Position die Anzeigeeinheit zu aktivieren, als bei einer geringeren Geschwindigkeit und/oder einem geringeren Abstand des anderen Kraftfahrzeugs. Das hat den Vorteil, dass entsprechend das andere Kraftfahrzeug, dessen Fahrer bei einer höheren Geschwindigkeit oder einem geringeren Abstand weniger Zeit hat, auf eine Fahrtrichtungsänderung beziehungsweise eine Anzeige einer Fahrtrichtungsänderung des vorausfahrenden Kraftfahrzeugs zu reagieren, in diesem Fall mehr Zeit für eine Reaktion erhält. Durch das situationsabhängige Anpassen wird zugleich bei geringerer Geschwindigkeit oder größerem Abstand eine Irritation und mögliche Fehlinterpretation eines übermäßig lange andauernden oder in einem weiteren Abstand vor der Abzweigung, der Kreuzung oder der vorgegebenen Position erfolgenden Blinkens beziehungsweise Anzeigens der Fahrtrichtungsänderung verhindert, in diesem Fall erst verhältnismäßig spät geblinkt wird.

In einer bevorzugten Ausführungsform ist vorgesehen, dass die Fahrerassistenzeinrichtung eine zweite Erfassungseinrichtung zum Erfassen einer Blickrichtung zumindest eines Insassen des Kraftfahrzeugs, insbesondere eines Fahrers, umfasst. Dabei ist die Anzeigeeinheit mittels der Steuereinheit in Abhängigkeit von der erfassten Blickrichtung steuerbar. Entsprechend ist die Anzeigeeinheit mittels der Steuereinheit in Abhängigkeit der erfassten Blickrichtung aktivierbar oder das automatische Aktivieren der Anzeigeeinheit in Abhängigkeit von der erfassten Blickrichtung verhinderbar. Das hat einerseits den Vorteil, dass ein automatisches Anzeigen einer Fahrtrichtungsänderung möglich ist, wenn sich das Kraftfahrzeug nicht einer Abzweigung, Kreuzung oder vorgegebenen Position sondern einem sonstigen Interessenpunkt eines Insassen nähert. Andererseits ist ein fälschliches automatisches Aktivieren einer Fahrtrichtungsänderungsanzeige verhinderbar, beispielsweise wenn der Fahrer kurz vor der erwarteten Fahrtrichtungsänderung in vorbestimmter Weise, beispielsweise über eine längere Zeit hinweg, in eine anderen Richtung blickt, so dass die ursprüngliche Fahrtrichtungsänderung unwahrscheinlich ist. Das Risiko eines sich im Nachhinein als fälschliches Anzeigen einer Fahrtrichtungsänderung entpuppendes Anzeigen einer Fahrtrichtungsänderung ist damit minimiert. Damit wird eine Irritation anderer Verkehrsteilnehmer verhindert und die Sicherheit erhöht.

In einer weiteren bevorzugten Ausführungsform ist vorgesehen, dass die Fahrerassistenzeinrichtung eine dritte Erfassungseinheit aufweist, zum Erfassen und Auswerten einer Konversation zumindest zweier Insassen eines Kraftfahrzeugs, insbesondere des Fahrers und eines Beifahrers. Dabei ist die Anzeigeeinheit mittels der Steuereinheit in Abhängigkeit von einem ausgewerteten Ergebnis der erfassten Konversation steuerbar. Es ist also wie im letzten Absatz beschrieben, die Anzeigeeinheit durch die Steuereinheit aktivierbar oder das automatische Aktivieren bei einem Annähern an solch eine Abzweigung, Kreuzung oder vorgegebenen Position verhinderbar. Es kann so beispielsweise, wenn sich zwei Insassen darüber unterhalten, dass sie eine Tankstelle suchen oder das Fahrzeug zu betanken ist und in der Navigationseinheit beispielsweise eine nahegelegene oder sogar an der präferierten Route befindliche Tankstelle vermerkt ist, eine entsprechende Fahrtrichtungsänderungsanzeige gesetzt oder eine der erfassten und ausgewerteten Konversation widersprechende Fahrtrichtungsänderungsanzeige verhindert werden. das hat den Vorteil, dass die Flexibilität der Fahrerassistenzeinrichtung erhöht wird und somit ähnlich wie im letzten Absatz beschrieben eine Irritation anderer Verkehrsteilnehmer verhinderbar ist.

In einer anderen Ausführungsform ist vorgesehen, dass die Steuereinheit ausgelegt ist, vor dem automatischen Aktivieren der Anzeigeeinheit mittels einer Signaleinheit an den Fahrer des Kraftfahrzeugs ein mit dem automatischen Aktivieren zusammenhängendes Signal auszugeben. Der Fahrer kann so über das Signal über ein bevorstehendes automatisches Aktivieren der Anzeigeeinheit durch die Steuereinheit informiert werden und das automatische Aktivieren gegebenenfalls verhindern. Das hat den Vorteil, dass die Wahrscheinlichkeit einer fälschlicherweise durchgeführten automatischen Aktivierens der Anzeigeeinheit verringert ist und somit die Sicherheit im Straßenverkehr erhöht wird.

In einer bevorzugten Ausführungsform ist vorgesehen, dass der Unterstützungs-Betriebsmodus der Steuereinheit durch eine Bedienhandlung eines Insassen des Kraftfahrzeugs aktivierbar und/oder deaktivierbar ist. Das hat den Vorteil, dass beispielsweise in einer frühen Lernphase der Fahrerassistenzeinrichtung, in welcher eine präferierte Route noch nicht mit ausreichender Verlässlichkeit erlernt ist, ein möglicherweise fehlerbehaftetes automatisches Aktivieren der Anzeigeeinheit durch die Steuereinheit grundsätzlich ausgeschlossen werden kann. Dies trägt zu einer erhöhten Sicherheit im Straßenverkehr bei. Überdies kann so der Fahrer selbst entscheiden, ob er ein automatisches Aktivieren der Anzeigeeinheit wünscht oder nicht.

Die Erfindung betrifft auch ein Verfahren zum Betreiben einer Fahrerassistenzeinrichtung eines Kraftfahrzeugs. Ein erster Schritt ist hier ein Bestimmen von einer Vielzahl von Positionen des Kraftfahrzeugs durch eine Navigationseinheit. Es folgt ein selbsttätiges Speichern zumindest einer präferierten Route des Kraftfahrzeugs in Abhängigkeit der Vielzahl von durch die Navigationseinheit bestimmten Positionen durch die Navigationseinheit. Schließlich erfolgt ein automatisches Anzeigen einer Fahrtrichtungsänderung durch eine Anzeigeeinheit des Kraftfahrzeugs, wenn das Kraftfahrzeug sich auf der von der Navigationseinheit gespeicherten präferierten Route einer Abzweigung, einer Kreuzung oder einer vorgegebenen Position eines Spurwechsels nähert, an welcher gemäß der gespeicherten präferierten Route, eine Fahrtrichtungsänderung des Kraftfahrzeugs zu erwarten ist. Vorteile und vorteilhafte Ausführungsformen entsprechen hier den Vorteilen und vorteilhaften Ausführungsformen der Fahrerassistenzeinrichtung.

Alle vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder aber in Alleinstellung gemäß den beiliegenden Ansprüchen verwendbar, ohne den Rahmen der Erfindung zu verlassen. Es sind somit auch Ausführungen von der Erfindung als umfasst und offenbart anzusehen, die in der Figur nicht explizit gezeigt und erläutert sind, jedoch durch separierte Merkmalskombinationen aus den beiliegenden Ansprüchen hervorgehen und erzeugbar sind.

Ein Ausführungsbeispiel der Erfindung wird nachfolgend anhand einer schematischen Zeichnung näher erläutert. Dabei zeigt die einzige Fig. eine schematische Darstellung eines Kraftfahrzeugs mit einer beispielhaften Ausführungsform einer Fahrerassistenzeinrichtung aus einer Vogelperspektive in einer beispielhaften Fahrsituation.

In der einzigen Fig. weist ein Kraftfahrzeug 1 eine beispielhafte Ausführungsform einer Fahrerassistenzvorrichtung 2 auf, welche eine Anzeigeeinheit 3 mit einem ersten Anzeigeelement 3' und einem zweiten Anzeigeelement 3" umfasst. Zusätzlich weist das Kraftfahrzeug 1 eine Navigationseinheit 4 auf, sowie eine Steuereinheit 5 zum Steuern der Anzeigeeinheit 3 in Abhängigkeit von der Navigationseinheit 4. Das Kraftfahrzeug 1 bewegt sich im gezeigten Beispiel in y-Richtung in gerader Richtung auf einer Straße 6. Von der Straße 6 führt vorliegend an einer Abzweigung 9 in x-Richtung ein Weg 7 ab. Im gezeigten Beispiel ist nun das Kraftfahrzeug 1 schon des Öfteren von der Straße 6 in den Weg 7 eingebogen, so dass die Vielzahl von Positionen, welche eine Bewegung des Kraftfahrzeugs 1 darstellen und welche vorliegend laufend von der Navigationseinheit bestimmt wurden und werden, eine präferierte Route 8 bilden, welche in der Navigationseinheit 4 gespeichert ist. Entsprechend ist gemäß der gespeicherten präferierten Route 8 an der Abzweigung 9 eine Fahrtrichtungsänderung des Kraftfahrzeugs 1 zu erwarten.

Vorliegend nähert sich das Kraftfahrzeug 1 auf der Route 8 der besagten Abzweigung 9. In einem Abstand d vor dem Erreichen der Abzweigung 9, wird nun durch die Steuereinheit 5 automatisch die Anzeigeeinheit 3 beziehungsweise vorliegend das zweite Anzeigeelement 3", welches sich auf der dem Weg 7 zugewandten Seite des Kraftfahrzeugs 1 befindet, aktiviert. Dies erfolgt ohne Zutun des Fahrers und auch ohne eine aktivierte Routenführung, sprich ohne eine Anzeige einer über eine Fahrereingabe programmierten Fahrtroute in die Navigationseinheit.

Das automatische Aktivieren, bzw. der Abstand d, in welchem das automatische Aktivieren erfolgt, hängt in der vorliegenden Ausführungsform der Fahrerassistenzeinrichtung von einer Geschwindigkeit des Kraftfahrzeugs 1 abhängen. Hätte sich hier beispielsweise das Kraftfahrzeug 1 mit einer im Vergleich höheren Geschwindigkeit der Abzweigung 9 genähert, so hätte in der vorliegenden Ausführungsform die Steuereinheit 5 die Anzeigeeinheit 3 beziehungsweise das zweite Anzeigeelement 3" in einem größeren Abstand d von der Abzweigung 9 aktiviert als dies in der Fig. der Fall ist. Damit würde dem Umstand Rechnung getragen, dass andere Verkehrsteilnehmer bei einer höheren Geschwindigkeit des Kraftfahrzeugs 1 und unverändertem Abstand d weniger Zeit hätten, sich auf eine Änderung der Fahrtrichtung des Kraftfahrzeugs 1 einzustellen. Das Anpassen des Abstands d an die Geschwindigkeit des Kraftfahrzeugs 1 somit ist der Sicherheit im Straßenverkehr zuträglich.

Im gezeigten Beispiel bewegt sich auch ein anderes Kraftfahrzeug 10 in y-Richtung auf der Straße 6. Dieses befindet sich hier in einem Abstand e hinter dem Kraftfahrzeug 1. Der Abstand d vor der Abzweigung 9, in welchem die Anzeigeeinheit 3 automatisch aktiviert wird, ist in der gezeigten Ausführungsform von dem Abstand e zwischen den beiden Kraftfahrzeugen 1, 10 sowie der Geschwindigkeit des anderen Kraftfahrzeugs 10 abhängig. Es kann hier beispielsweise bei einem größeren Abstand e zwischen den Kraftfahrzeugen 1, 10 ein kleinerer Abstand d vor der Abzweigung 9 gewählt werden. Es kann auch bei einer größeren Geschwindigkeit des anderen Kraftfahrzeugs 10 ein größerer Abstand d vor der Abzweigung 9 gewählt werden. Das hat den Vorteil, dass die zeitliche Dauer, in welcher die Anzeigeeinheit 3 zum Anzeigen einer Fahrtrichtungsänderung aktiv ist, an die Geschwindigkeiten und Abstände d, e und damit an entsprechende Reaktionszeiten der Fahrer und anderer Verkehrsteilnehmer angepasst ist. Damit ist die Sicherheit im Straßenverkehr erhöht.

## Patentansprüche

1. Fahrerassistenzeinrichtung (2) für ein Kraftfahrzeug (1) mit
- einer Navigationseinheit (4) zum Bestimmen einer Position des Kraftfahrzeugs (1);
- einer Anzeigeeinheit (3) zum Anzeigen einer Fahrtrichtungsänderung;
- einer Steuereinheit (5) zum Steuern der Anzeigeeinheit (3) in Abhängigkeit von der Navigationseinheit (4);
wobei die Steuereinheit (5) ausgelegt ist, die Anzeigeeinheit (3) automatisch zu aktivieren, wenn das Kraftfahrzeug (1) sich einer Abzweigung (9), einer Kreuzung oder einer vorgegebenen Position eines Spurwechsels nähert, an welcher gemäß einer in der Navigationseinheit (4) gespeicherten Route (8) eine Fahrtrichtungsänderung des Kraftfahrzeugs (1) zu erwarten ist,
wobei- die Navigationseinheit (4) ausgelegt ist, auf Basis einer Vielzahl von durch die Navigationseinheit (4) bestimmten Positionen des Kraftfahrzeugs (1) zumindest eine präferierte Route (8) selbsttätig zu speichern; und
- die Steuereinheit (5) ausgelegt ist, die Anzeigeeinheit (3) in einem Unterstützungs-Betriebsmodus automatisch zu aktivieren, wenn das Kraftfahrzeug (1) sich auf der von der Navigationseinheit (4) gespeicherten präferierten Route (8) der Abzweigung (9), der Kreuzung oder der vorgegebenen Position eines Spurwechsels nähert, an welcher gemäß der gespeicherten präferierten Route (8) eine Fahrtrichtungsänderung des Kraftfahrzeugs (1) zu erwarten ist,
**gekennzeichnet durch**
- eine erste Erfassungseinheit (11) zum Erfassen einer Geschwindigkeit oder eines Abstands (e) eines anderen Kraftfahrzeugs (10),
wobei die Anzeigeeinheit (3) mittels der Steuereinheit (5) in Abhängigkeit von der Geschwindigkeit oder von dem Abstand (e) aktivierbar ist, und die Steuereinheit (5) ausgelegt ist, bei einer höheren Geschwindigkeit oder einem geringeren Abstand (e) bereits in größerem Abstand (d) von der Abzweigung (9), der Kreuzung oder der vorgegebenen Position die Anzeigeeinheit (3) zu aktivieren als bei einer geringeren Geschwindigkeit oder einem größeren Abstand (e).

2. Fahrerassistenzeinrichtung (2) nach Anspruch 1 **dadurch gekennzeichnet, dass**
mittels der ersten Erfassungseinheit (11) ein hinter dem Kraftfahrzeug (1) fahrendes anderes Kraftfahrzeug (10) erfassbar ist und die Anzeigeeinheit (3) mittels der Steuereinheit (5) in Abhängigkeit von dem Abstand (e) des hinter dem Kraftfahrzeug (1) fahrenden anderen Kraftfahrzeugs (10) und/oder von dessen Geschwindigkeit aktivierbar ist.

3. Fahrerassistenzeinrichtung (2) nach einem der vorhergehenden Ansprüche,
**gekennzeichnet durch**
- eine zweite Erfassungseinheit zum Erfassen einer Blickrichtung zumindest eines Insassen des Kraftfahrzeugs (1), insbesondere eines Fahrers, wobei die Anzeigeeinheit (3) mittels der Steuereinheit (5) in Abhängigkeit von der erfassten Blickrichtung steuerbar ist.

4. Fahrerassistenzeinrichtung (2) nach einem der vorhergehenden Ansprüche,
**gekennzeichnet durch**
- eine dritte Erfassungseinheit zum Erfassen und Auswerten einer Konversation zumindest zweier Insassen des Kraftfahrzeugs (1), insbesondere des Fahrers und eines Beifahrers,
wobei die Anzeigeeinheit (3) mittels der Steuereinheit (5) in Abhängigkeit von einem ausgewerteten Ergebnis der erfassten Konversation steuerbar ist.

5. Fahrerassistenzeinrichtung (2) nach einem der vorhergehenden Ansprüche,
**dadurch gekennzeichnet, dass**
die Steuereinheit (5) ausgelegt ist, vor dem automatischen Aktivieren der Anzeigeeinheit (3) mittels einer Signaleinheit an den Fahrer des Kraftfahrzeugs (1) ein mit dem automatischen Aktivieren zusammenhängendes Signal auszugeben.

6. Fahrerassistenzeinrichtung (2) nach einem der vorhergehenden Ansprüche,
**dadurch gekennzeichnet, dass**
der Unterstützungs-Betriebsmodus der Steuereinheit (5) durch eine Bedienhandlung eines Insassen des Kraftfahrzeugs (1) aktivierbar und/oder deaktivierbar ist.

7. Verfahren zum Betreiben einer Fahrerassistenzeinrichtung (2) eines Kraftfahrzeugs (1), mit den Schritten
- Bestimmen von einer Vielzahl von Positionen des Kraftfahrzeugs (1) durch eine Navigationseinheit (4);
- selbsttätiges Speichern zumindest einer präferierten Route (8) des Kraftfahrzeugs (1) in Abhängigkeit der Vielzahl von durch die Navigationseinheit (4) bestimmten Positionen durch die Navigationseinheit (4), **gekennzeichnet durch** ein
- Erfassen einer Geschwindigkeit oder eines Abstands (e) eines anderen Kraftfahrzeugs (10), und ein
- Automatisches Anzeigen einer Fahrtrichtungsänderung durch eine Anzeigeeinheit (3) des Kraftfahrzeugs (1), wenn das Kraftfahrzeug (1) sich auf der von der Navigationseinheit (4) gespeicherten präferierten Route (8) einer Abzweigung (9), einer Kreuzung oder einer vorgegebenen Position eines Spurwechsels nähert, an welcher gemäß der gespeicherten präferierten Route (8) eine Fahrtrichtungsänderung des Kraftfahrzeugs (1) zu erwarten ist, wobei die Anzeigeeinheit (3) mittels der Steuereinheit (5) in Abhängigkeit von der Geschwindigkeit oder von dem Abstand (e) aktiviert wird, wobei durch die Steuereinheit (5) die Anzeigeeinheit (3) bei einer höheren Geschwindigkeit oder einem geringeren Abstand (e) bereits in größerem Abstand (d) von der Abzweigung (9), der Kreuzung oder der vorgegebenen Position aktiviert wird als bei einer geringeren Geschwindigkeit oder einem größeren Abstand (e).

## Claims

1. Driver assistance device (2) for a motor vehicle (1) comprising
- a navigation unit (4) for determining a position of the motor vehicle (1);
- a display unit (3) for displaying a change of travel direction;
- a control unit (5) for controlling the display unit (3) depending on the navigation unit (4);
wherein the control unit (5) is designed to automatically activate the display unit (3) when the motor vehicle (1) approaches a junction (9), a crossing or a predefined position of a lane change at which a change of travel direction of the motor vehicle (1) is to be expected according to a route (8) stored in the navigation unit (4),
wherein the navigation unit (4) is designed to automatically store at least one preferred route (8) on the basis of a number of positions of the motor vehicle (1) determined by the navigation unit (4); and
- the control unit (5) is designed to automatically activate the display unit (3) in a supporting operational mode when the motor vehicle (1) approaches the preferred route (8) of the junction (9), the crossing or the predefined position of a lane change stored by the navigation unit (4) at which a change of travel direction of the motor vehicle (1) is to be expected according to the preferred stored route (8),
**characterised by**
- a first detection unit (11) for detecting a speed or a distance (e) of another motor vehicle (10),
wherein the display unit (3) can be activated by means of the control unit (5) depending on the speed or on the distance (e) and the control unit (5) is designed to already activate the display unit (3) at a greater distance (d) from the junction (9), the crossing or the predefined position in the case of a higher speed or a shorter distance (e) than in the case of a lower speed or a greater distance (e).

2. Driver assistance device (2) according to claim 1,
**characterised in that**
another motor vehicle (10) driving behind the motor vehicle (1) can be detected by means of the first detection unit (11) and the display unit (3) can be activated by means of the control unit (5) depending on the distance (e) of the other motor vehicle (10) driving behind the motor vehicle (1) and/or can be activated by its speed.

3. Driver assistance device (2) according to any one of the preceding claims,
**characterised by**
- a second detection unit for detecting a viewing direction of at least one occupant of the motor vehicle (1), in particular a driver, wherein the display unit (3) can be controlled by means of the control unit (5) depending on the detected viewing direction.

4. Driver assistance device (2) according to any one of the preceding claims,
**characterised by**
- a third detection unit for detecting and evaluating a conversation of at least two occupants of the motor vehicle (1), in particular the driver and a passenger, wherein the display unit (3) can be controlled by means of the control unit (5) depending on an evaluated result of the detected conversation.

5. Driver assistance device (2) according to any one of the preceding claims,
**characterised in that** the control unit (5) is designed to send a signal associated with the automatic activation prior to the automatic activation of the display unit (3) by means of a signal unit to the driver of the motor vehicle (1).

6. Driver assistance device (2) according to any one of the preceding claims,
**characterised in that**
the supporting operational mode of the control unit (5) can be activated and/or deactivated by an operational action of an occupant of the motor vehicle (1).

7. Method for operating a driver assistance device (2) of a motor vehicle (1), comprising the steps
- determining a number of positions of the motor vehicle (1) by a navigation unit (4);
- automatically storing at least one preferred route (8) of the motor vehicle (1) by the navigation unit (4) depending on the number of positions determined by the navigation unit (4), **characterised by**
- detecting a speed or a distance (e) of another motor vehicle (10) and
- automatically displaying a change of travel direction by a display unit (3) of the motor vehicle (1) when the motor vehicle (1) approaches the preferred route (8) of a junction (9), a crossing or a predefined position of a lane change stored by the navigation unit (4) at which a change of travel direction of the motor vehicle (1) is to be expected according to the preferred stored route (8) wherein the display unit (3) is activated by means of the control unit (5) depending on the speed or on the distance (e), wherein the display unit (3) is already activated by the control unit (5) at a greater distance (d) from the junction (9), the crossing or the predefined position in the case of a higher speed or a shorter distance (e) than in the case of a lower speed or a greater distance (e).

## Revendications

1. Dispositif d'assistance au conducteur (2) pour un véhicule automobile (1) avec
- une unité de navigation (4) destinée à déterminer une position du véhicule automobile (1) ;
- une unité d'affichage (3) destinée à afficher un changement de direction de conduite ;
- une unité de commande (5) destinée à commander l'unité d'affichage (3) en fonction de l'unité de navigation (4) ;
dans lequel l'unité de commande (5) est conçue pour activer automatiquement l'unité d'affichage (3) lorsque le véhicule automobile (1) s'approche d'un embranchement (9), d'un croisement ou d'une position prédéterminée d'un changement de voie au niveau de laquelle un changement de direction de conduite du véhicule automobile (1) est à escompter selon un itinéraire (8) mémorisé dans l'unité de navigation (4),
dans lequel l'unité de navigation (4) est conçue pour mémoriser automatiquement au moins un itinéraire préféré (8) sur la base d'une pluralité de positions, déterminées par l'unité de navigation (4), du véhicule automobile (1) ; et
dans lequel l'unité de commande (5) est conçue pour activer automatiquement l'unité d'affichage (3) dans un mode de fonctionnement d'assistance lorsque le véhicule automobile (1) s'approche, sur l'itinéraire préféré (8) mémorisé par l'unité de navigation (4), de l'embranchement (9), du croisement ou de la position prédéterminée d'un changement de voie au niveau de laquelle un changement de direction de conduite du véhicule automobile (1) est à escompter selon l'itinéraire préféré (8) mémorisé,
**caractérisé par** une première unité de détection (11) destinée à détecter une vitesse ou une distance (e) d'un autre véhicule automobile (10),
dans lequel l'unité d'affichage (3) peut être activée au moyen de l'unité de commande (5) en fonction de la vitesse ou de la distance (e) et dans lequel l'unité de commande (5) est conçue pour, en cas de grande vitesse ou de petite distance (e), déjà activer l'unité d'affichage (3) à une plus grande distance (d) de l'embranchement (9), du croisement ou de la position prédéterminée d'un changement de voie qu'en cas de plus petite vitesse ou de plus grande distance (e).

2. Dispositif d'assistance au conducteur (2) selon la revendication 1, **caractérisé en ce qu'**un autre véhicule automobile (10) roulant derrière le véhicule automobile (1) peut être détecté au moyen de la première unité de détection (11) et **en ce que** l'unité d'affichage (3) peut être activée au moyen de l'unité de commande (5) en fonction de la distance (e) de l'autre véhicule automobile (10) roulant derrière le véhicule automobile (1) et/ou de sa vitesse.

3. Dispositif d'assistance au conducteur (2) selon l'une quelconque des revendications précédentes, **caractérisé par**
- une deuxième unité de détection destinée à détecter une direction du regard d'au moins un occupant du véhicule automobile (1), en particulier d'un conducteur, l'unité d'affichage (3) pouvant être commandée au moyen de l'unité de commande (5) en fonction de la direction de regard détectée.

4. Dispositif d'assistance au conducteur (2) selon l'une quelconque des revendications précédentes, **caractérisé par**
- une troisième unité de détection destinée à détecter et évaluer une conversation d'au moins deux occupants du véhicule automobile (1) en particulier du conducteur et d'un passager, l'unité d'affichage (3) pouvant être commandée au moyen de l'unité de commande (5) en fonction d'un résultat évalué de la conversation détectée.

5. Dispositif d'assistance au conducteur (2) selon l'une quelconque des revendications précédentes, **caractérisé en ce que** l'unité de commande (5) est conçue pour, avant l'activation automatique de l'unité d'affichage (3), délivrer un signal en rapport avec l'activation automatique au conducteur du véhicule automobile (1) au moyen d'une unité de signalisation.

6. Dispositif d'assistance au conducteur (2) selon l'une quelconque des revendications précédentes, **caractérisé en ce que** le mode de fonctionnement d'assistance de l'unité de commande (5) peut être activé et/ou désactivé par une manipulation de commande d'un occupant du véhicule automobile (1).

7. Procédé de fonctionnement d'un dispositif d'assistance au conducteur (2) d'un véhicule automobile (1), avec les étapes :
- détermination d'une pluralité de positions du véhicule automobile (1) par une unité de navigation (4) ;
- mémorisation automatique, par l'unité de navigation (4), d'au moins un itinéraire préféré (8) du véhicule automobile (1) en fonction de la pluralité de positions déterminées par l'unité de navigation (4) ;
**caractérisé par**
- une détection d'une vitesse ou d'une distance (e) d'un autre véhicule automobile (10) et
- un affichage automatique d'un changement de direction de conduite par une unité d'affichage (3) du véhicule automobile (1) lorsque le véhicule automobile (1) s'approche, sur l'itinéraire préféré (8) mémorisé par l'unité de navigation (4), d'un embranchement (9), d'un croisement ou d'une position prédéterminée d'un changement de voie au niveau de laquelle un changement de direction de conduite du véhicule automobile (1) est à escompter selon l'itinéraire préféré (8) mémorisé,
dans lequel l'unité d'affichage (3) est activée au moyen de l'unité de commande (5) en fonction de la vitesse ou de la distance (e) et
dans lequel l'unité d'affichage (3) est déjà activée par l'unité de commande (5), en cas de grande vitesse ou de petite distance (e), à une plus grande distance (d) de l'embranchement (9), du croisement ou de la position prédéterminée d'un changement de voie qu'en cas de plus petite vitesse ou de plus grande distance (e).
